# EUROPÄISCHE PATENTSCHRIFT

(11) **EP 1 672 770 B1**
(45) Veröffentlichungstag und Bekanntmachung des Hinweises auf die Patenterteilung: **04.06.2008**
(21) Anmeldenummer: 05020865.1
(22) Anmeldetag: 24.09.2005
(51) Int. Cl.: H02K 15/16

(54) **Rahmenloser Torque-Motor mit einer den Rotor gegenüber dem Stator fixierende Transportsicherung**
Frameless torque motor with a shipping fixture securing the rotor with respect to the stator
Machine sans palier avec dispositif de transport immobilisant le rotor par rapport au stator

(30) Priorität: 16.12.2004 DE 102004060506
(43) Veröffentlichungstag der Anmeldung: 21.06.2006
(73) Patentinhaber: Etel S.A., 2112 Môtiers (CH)
(72) Erfinder: Vogt, Stéphane, 1424 Champagne (CH); Corsi, Nicolas, 1427 Bonvillars (CH); Dachaud, Fabien, 25300 Pontarlier (FR)
(74) Vertreter: Hofmann, Ernst

(56) Entgegenhaltungen:
- WO-A-02/063745
- WO-A-20/04001932
- WO-A-20/04030186
- US-A- 5 952 746

## Beschreibung

Die Erfindung betrifft einen rahmenlosen Torque-Motor mit einer Transportsicherung. Solche Torque-Motoren finden Anwendung in vielen modernen Antriebslösungen.

In der EP 793 870 B2 sind Torque-Motoren beschrieben, die auf einem Rotor eine Anzahl Magnete und in einem Stator eine Anzahl Spulen auf den Zähnen eines Blechpaktes aufweisen. Solche Torque-Motoren können auch bei geringer Drehzahl ein hohes Drehmoment erzeugen. Dies ermöglicht äußerst gleichförmige Bewegungen und ausgezeichnete Geschwindigkeitsregelbarkeit. Da die Last durch einen Verzicht auf Kraftübertragungselemente direkt mit dem Motor gekoppelt ist, bieten diese Systeme eine sehr hohe Dynamik, Steifigkeit und Regelungsgenauigkeit, die allen konventionellen Antrieben überlegen sind. Torque-Motoren senken die Betriebskosten, vereinfachen die Maschinenkonstruktion, zeigen keinen Verschleiß und erfordern keine Wartung.

Rahmenlose Torque-Motoren werden unmittelbar in die jeweilige Anwendung integriert. Die Lage des Rotors und des Stators zueinander wird nicht durch ein eigenes Lager des Torque-Motors definiert, sondern unmittelbar durch den konstruktiven Aufbau der Anwendung. Typische Anwendungen sind etwa Rundtische oder Schwenkachsen in Werkzeugmaschinen, Teleskopantriebe oder Bestückungsautomaten.

Rotor und Stator eines Torque-Motors werden gelegentlich getrennt von einander ausgeliefert. Dies bedeutet für den Anwender jedoch, dass er die beiden Teile selbst zueinander justieren muss. Wegen der hohen Anziehungskräfte zwischen Rotor und Stator ist dies keine leichte Aufgabe. Üblicherweise wird ein solcher Torque-Motor vom Hersteller bereits vorjustiert ausgeliefert.

Da Torque-Motoren kein eigenes Lager bzw. keinen eigenen Rahmen aufweisen, müssen Rotor und Stator nach der Vorjustierung mit anderen Mitteln zueinander gehalten werden. Üblicherweise kommt hierbei als Transportsicherung eine so genannte Motorbrücke zum Einsatz. Diese besteht aus einem oder mehreren Teilen, die mit dem Rotor und dem Stator längs deren Umfang verschraubt werden, nachdem diese mit einer Zentriervorrichtung zueinander ausgerichtet wurden.

Da die in Torque-Motoren üblicherweise verwendeten Magnete sehr stark sind, werden die Motorbrücken meist aus nichtmagnetischem Material wie z.B. Aluminium gefertigt. So lassen sich die Motorbrücken problemlos zum Torque-Motor ausrichten und befestigen. Da die magnetischen Kräfte zwischen den Magneten des Rotors und dem Blechpaket des Stators sehr hoch sind, müssen die Motorbrücken sehr stabil ausgeführt werden. Ein Berühren der Magnete des Rotors mit dem Blechpaket des Stators muss nämlich unter allen Umständen vermieden werden. Eine Trennung der beiden Teile wäre nur sehr schwer zu bewerkstelligen. Solche Motorbrücken sind damit relativ aufwändig und teuer. Sie müssen daher nach erfolgtem Einbau des Torque-Motors in die jeweilige Anwendung an den Hersteller des Torque-Motors zurückgegeben werden, was einen nicht unerheblichen logistischen Aufwand bedeutet.

Zudem beeinträchtigen solche Motorbrücken den Einbau des Torque-Motors in die jeweilige Anwendung. Die Schrauben zum Lösen der Motorbrücke müssen nämlich noch zugänglich sein, nachdem der Motor in der jeweiligen Anwendung platziert wurde. Ebenso muss noch ein Weg zum Entfernen der Motorbrücke vorhanden sein. Dies stellt nicht unerhebliche Ansprüche an die Gesamtkonstruktion. Oft erschwert auch die starre Verbindung zwischen Rotor und Stator den Einbau, so dass die Motorbrücke zunächst gelockert werden muss, um den Torque-Motor dann endgültig in seiner Einbaulage zu justieren und zu fixieren. Erst dann kann die Motorbrücke endgültig entfernt werden.

Die US 5952746 zeigt eine Transportsicherung für einen Rotor und einen Stator einer elektrischen Maschine, wobei die Transportsicherung eine Schulter am Stator umfasst, gegen die der Rotor mittels Fixierungsschrauben gedrängt wird. Eine solche Lösung ist konstruktiv aufwändig, da nur zum Zwecke der Transportsicherung Vorrichtungen am Stator und zusätzliche Schrauben nötig sind.

Aufgabe der Erfindung ist es daher, eine einfachere und kostengünstigere Transportsicherung für rahmenlose Torque-Motoren anzugeben.

Diese Aufgabe wird gelöst durch eine Vorrichtung mit den Merkmalen des Anspruches 1. Vorteilhafte Ausführungsformen ergeben sich aus den Merkmalen, die in den von Anspruch 1 abhängigen Ansprüchen aufgeführt sind.

In einem rahmenlosen Torque-Motor, der ein ferromagnetisches Primärteil und ein Sekundärteil mit zum Primärteil weisenden Magneten aufweist, sind Primärteil und Sekundärteil durch eine Transportsicherung auf Abstand gehalten. Das Primärteil und das Sekundärteil sind durch die Magnetkraft der Magnete zueinander fixiert. Die Transportsicherung besteht aus einem Abstandshalter, der im Luftspalt zwischen Primärteil und Sekundärteil angeordnet ist.

Primärteil und Sekundärteil sind so ohne jede Schraubverbindung lediglich durch die Kraft der Magnete des Sekundärteils miteinander verbunden. Der Abstandshalter wird dabei auf einer Seite des Torque-Motors im dort reduzierten Luftspalt durch die Kraft der Magnete festgeklemmt, so dass er nicht aus dem Luftspalt herausfallen kann. Insbesondere für einen mehrteiligen Abstandshalter ist es vorteilhaft, wenn er ferromagnetische Eigenschaften besitzt. Dann wird er auch auf der Seite des Torque-Motors mit erweitertem Luftspalt durch die Anziehungskraft der Magnete gehalten.

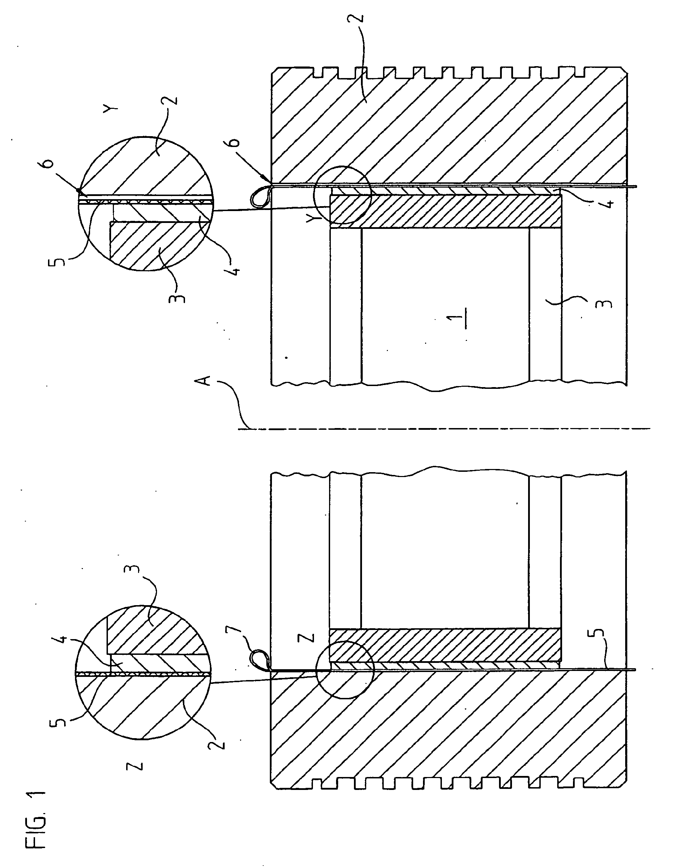

Weitere Vorteile sowie Einzelheiten der vorliegenden Erfindung ergeben sich aus der nachfolgenden Beschreibung einer bevorzugten Ausführungsform anhand der Figur. Es zeigt die
- Figur 1: einen Torque-Motor mit einer Transportsicherung.

Die Figur 1 zeigt einen Schnitt durch einen Torque-Motor 1. Die Schnittebene enthält die Drehachse A des Motors. Das Primärteil 2 des Torque-Motors 1 enthält ein Blechpaket mit dem Sekundärteil 3 zugewandten Zähnen und darauf angeordneten Wicklungen. Das Primärteil 2 ist in diesem Beispiel dafür vorgesehen, ortsfest und starr z.B. mit dem Fundament eines Rundtisches verbunden zu werden. Es.wird daher auch als Stator 2 bezeichnet.

Das Sekundärteil 3 weist dem Primärteil 2 zugewandte Magnete 4 auf. Es ist dafür vorgesehen, starr mit dem beweglichen Teil der jeweiligen Applikation, also z.B. mit dem Drehteller des erwähnten Rundtisches verbunden zu werden. Über dessen Lager ist das Sekundärteil 3 dann drehbar relativ zum Stator 2 gehalten. Es wird daher auch als Rotor 3 bezeichnet.

Der Hersteller des Torque-Motors 1 muss den Stator 2 und den Rotor 3 entweder getrennt zum Hersteller der jeweiligen Applikation liefern, oder zunächst mittels einer Zentriervorrichtung vorjustiert und dann zueinander fixiert und gesichert.

Eine wesentliche Aufgabe der Transportsicherung 5 in der Figur 1 ist es, den direkten Kontakt der Magnete des Rotors 3 mit dem Stator 2 zu verhindern, da dabei Beschädigungen drohen, und eine Trennung nur noch sehr schwer zu bewerkstelligen wäre. Eine Transportsicherung 5, die diese Funktion erfüllt, genügt, da Stator 2 und Rotor 3 allein durch die Kraft der Magnete 4 des Rotors ausreichend zueinander fixiert sind. Da diese Fixierung nicht starr ist, wird der Einbau in die jeweilige Applikation erleichtert. Der Rotor 3 ist im Stator 2 in gewissen Grenzen gegen die Magnetkraft beweglich und kann daher für den Einbau in die jeweilige Applikation zurecht gerückt werden.

Die Transportsicherung in Figur 1 besteht aus einem Abstandshalter 5, der in den Luftspalt 6 zwischen dem Rotor 3 und dem Stator 2 des Torque-Motors 1 eingebracht ist. Der Abstandshalter 5 kann dabei aus einem einzigen umlaufenden Band bestehen, er kann aber auch aus mehreren Bandsegmenten bestehen, um Material zu sparen.

Aufgrund der Magnetkräfte wird sich beim Lösen des Torque-Motors 1 aus seiner Zentriervorrichtung der Rotor 3 in einer radialen Richtung dem Stator 2 annähern, bis er auf den Abstandshalter 5 trifft. Dadurch wird der Luftspalt 6 auf einer ersten Seite des Torque-Motors 1 zwischen dem Rotor 3 und dem Stator 2 auf die radiale Dicke des Abstandshalters 5 reduziert. Der Abstandshalter 5 wird dabei zwischen dem Rotor 3 und dem Stator 2 eingeklemmt. Dieser Zustand ist in der Figur 1 in der linken Bildhälfte dargestellt, insbesondere im vergrößerten Ausschnitt Z. Ein so geklemmter Abstandshalter 5 kann nicht mehr aus dem Torque-Motor fallen.

Auf einer der ersten Seite des Torque-Motors 1 gegenüberliegenden zweiten Seite (in der Figur 1 in der rechten Bildhälfte, insbesondere im vergrößerten Ausschnitt Y dargestellt) erweitert sich der Luftspalt 6 entsprechend. Ein als Band umlaufender, einstückiger Abstandshalter 5 würde auf dieser Seite zwar nicht eingeklemmt, er würde aber auch nicht aus dem Torque-Motor 1 fallen, da er ja noch auf der anderen Motorseite geklemmt wäre. Anders verhält sich dies bei einem mehrstückigen, aus mehreren Bandsegmenten bestehenden Abstandshalter 5. Hier würden die nicht eingeklemmten Segmente aus dem Luftspalt 6 herausfallen.

Um dieses Problem zu vermeiden wird der Abstandshalter 5 bevorzugt aus einem Material mit ferromagnetischen Eigenschaften hergestellt. Dann ist sichergestellt, dass der Abstandshalter 5 auch im erweiterten Luftspalt 6 nicht herausfällt, da er von den Magneten 4 gehalten wird. Auch das Einbringen des Abstandshalters 5 in den Luftspalt 6 ist mit einem ferromagnetischen Abstandshalter 5 erleichtert, da der Abstandshalter 5 an den Magneten 4 des Rotors 3 haftet, während dieser mittels der Zentriervorrichtung in den Stator 2 eingeführt wird.

Der Abstandhalter 5 muss eine radiale Dicke aufweisen, die etwas kleiner ist als der nominale, also durchschnittliche Luftspalt 6. Die radiale Dicke muss außerdem groß genug sein, um ein zu starkes Anhaften des Rotors 3 am Stator 2 zu verhindern. Für einen typischen Luftspalt 6 von ca. 1 mm hat sich eine Dicke von ca. 0,8mm bewährt. Für einen Luftspalt 6 von 0,7 mm wurden erfolgreich Abstandshalter 5 mit einer Dicke von 0,6 mm eingesetzt. Generell sollte die radiale Dicke des Abstandshalters 5 ungefähr zwischen 40 % - 95 % des nominalen Luftspaltes 6 liegen. Für kleinere Werte kommt der Rotor 3 dem Stator 2 zu nahe, für größere Werte wird das Einbringen des Abstandshalters 5 in den Luftspalt 6 unverhältnismäßig schwierig, da eine sehr genaue Zentrierung des Rotors 3 im Stator 2 erforderlich ist.

Unter Umständen wäre auch der Einsatz von Abstandshaltern 5 unterschiedlicher radialer Dicke sinnvoll, um im Bereich des vergrößerten Luftspaltes 6 eine bessere Absicherung gegen unerwünschte Bewegung des Rotors 3 im Stator 2 bei heftigen Stößen während des Transportes zu vermeiden. Es könnten dann Segmente von Abstandshaltern 5 verwendet werden, die zum Teil eine radiale Dicke vom mehr als 100 % des nominalen Luftspaltes 6 aufweisen. Der Rotor 3 müsste allerdings in diesem Fall bereits dezentriert in den Stator 2 eingeführt werden.

In axialer Richtung sollte der Abstandshalter 5 auf wenigstens einer Seite des Torque-Motors 1 aus dem Luftspalt 6 herausragen. So kann er, nachdem der Torque-Motor 1 in der jeweiligen Applikation fixiert wurde, einfach entfernt werden. Durch die Fixierung und vor allem Zentrierung in der Applikation wird der Luftspalt 6 wieder gleichmäßig breit. Der Abstandshalter 5 ist dann nicht mehr eingeklemmt und haftet nur noch aufgrund seiner ferromagnetischen Eigenschaften an den Magneten 4 des Rotors 3. Er kann dann einfach aus dem Torque-Motor 1 herausgezogen werde. Dies wird zusätzlich erleichtert, wenn er eine Vorrichtung aufweist, die ein Greifen des Abstandhalters 5 erleichtert. Eine solche Greifhilfe 7 ist in der Figur 1 dargestellt. Die Ausgestaltung dieser Greifhilfe 7 ist dabei recht beliebig. Es kann sich z.B. um ein einfaches Loch handeln, durch die ein Finger oder ein Werkzeug gesteckt werden kann, oder um eine Schlaufe, die ein bequemes Greifen des Abstandshalters 5 ermöglicht.

Das Material für den Abstandshalter 5 sollte wenig komprimierbar sein, um einen Mindestabstand zwischen Rotor 3 und Stator 2 zu garantieren. Es sollte außerdem Scherbeanspruchungen standhalten können. Der Rotor 3 kann nämlich durchaus kleinere axiale Bewegungen im Stator 2 ausführen, die für den eingeklemmten Abstandshalter 5 eine gewisse Scherbeanspruchung bedeuten. Der Rotor 3 wird aber niemals aus dem Stator 2 herausfallen, da er durch die herrschenden Magnetkräfte daran gehindert wird.

Das Material für den Abstandshalter 5 sollte außerdem eine gewisse Reißfestigkeit aufweisen, um den Belastungen beim Herausziehen aus dem Torque-Motor gewachsen zu sein. Es wäre sehr schwierig, im Torque-Motor 1 verbliebene Teile eines zerrissenen Abstandshalters 5 aus dem Luftspalt zu entfernen.

Eine weitere Anforderung an das Material des Abstandshalters 5 ist eine gewisse teflonartige Gleitfähigkeit auf dem Oberflächenmaterial des Rotors 3. Dies reduziert die beim Entfernen des Abstandshalters 5 aufzuwendenden Kräfte.

Ein Material, dass alle diese Eigenschaften aufweist, wurde in einer PVC - beschichteten Magnetfolie gefunden, wie sie auch zur Herstellung von Magnetschildern verwendet werden, die z.B. zu Reklamezwecken an Kraftfahrzeugen angebracht werden können. Solche Magnetfolien sind biegsam, und besitzen einen ferromagnetische Kern. Sie werden auch als Magnetgummi bezeichnet. Durch die zusätzliche Kunststoffbeschichtung, vorzugsweise einer PVC - Beschichtung, erhalten sie ein gute Gleitfähigkeit.

Die Tatsache, dass diese Magnetfolien in ihrer kommerziell verfügbaren Form bereits magnetisiert sind, stört einerseits beim Befestigen am Rotor 2 nicht, da dessen Magnetisierung ungleich stärker ist als die der Magnetfolie, andererseits kann diese Magnetisierung die Handhabung der Magnetfolie sogar erleichtern. So lassen sich z.B. zwei dünnere Magnetfolien zu einer zwei- oder mehrlagigen Schicht verbinden, die dann als Abstandshalter 5 eingesetzt werden kann. So benötigt man für verschiedene Torque-Motoren 1 mit unterschiedlichem Luftspalt 6 nur eine Sorte Magnetfolie. Außerdem erlaubt es die Magnetisierung auch, den Abstandshalter 5 zunächst am Blechpaket des Stators 2 zu befestigen und dann den Rotor 2 einzuführen. Dies kann unter gewissen Bedingungen vorteilhaft sein und wäre mit einem nicht magnetisierten Material unmöglich, da der Stator 2 nicht selbst magnetische Anziehungskräfte ausüben kann. Ein angenehmer Nebeneffekt der Magnetisierung der Abstandshalter 5 ist auch, dass sie sich trotz ihrer gleitfähigen Oberfläche gut stapeln und sicher z.B. auf metallischen Regalböden ablegen lassen.

Eine solche Magnetfolie kann entweder wieder verwendet werden, oder auch einfach entsorgt werden. Sie stellt, verglichen mit den Motorbrücken aus dem Stand der Technik, keinen wesentlichen Kostenfaktor dar.

Es sei noch angemerkt, dass die Anordnung von Primärteil und Sekundärteil vom hier beschriebenen Ausführungsbeispiel durchaus abweichen kann. So kann der Rotor mit seinen Magneten auch außen liegen. Ebenso kann das Sekundärteil, also das Element mit den Magneten, innen oder außen liegend, als. Stator fest mit dem unbeweglichen Teil einer Applikation verbunden werden. In jedem Fall wird der Torque-Motor einen Luftspalt aufweisen, in dem ein Abstandshalter 5 als Transportsicherung zum Einsatz kommen kann.

## Patentansprüche

1. Rahmenloser Torque-Motor mit Transportsicherung, wobei der Torque-Motor (1) ein ferromagnetisches Primärteil (2) und ein Sekundärteil (3) mit zum Primärteil weisenden Magneten (4) aufweist, die durch eine aus einem Abstandshalter (5) in einem Luftspalt (6) zwischen dem Primärteil (2) und dem Sekundärteil (3) bestehende Transportsicherung (5) auf Abstand gehalten werden, **dadurch gekennzeichnet, dass** das Primärteil (2) und das Sekundärteil (3) durch die Magnetkraft der Magnete (4) zueinander fixiert sind, wobei die Transportsicherung (5) aus einer biegsamen Folie besteht, die in einem oder mehreren Stücken in den Luftspalt (6) eingelegt ist.

2. Rahmenloser Torque-Motor nach Anspruch 1, **dadurch gekennzeichnet, dass** der Luftspalt (6) auf einer ersten Seite des Torque-Motors (1) auf die radiale Dicke des Abstandshalters (5) reduziert ist und der Abstandshalter (5) **dadurch** zwischen Primärteil (2) und Sekundärteil (3) eingeklemmt ist.

3. Rahmenloser Torque-Motor nach Anspruch 1 oder 2, **dadurch gekennzeichnet, dass** der Abstandshalter (5) ferromagnetisch ist.

4. Rahmenloser Torque-Motor nach Anspruch 2 und 3, **dadurch gekennzeichnet, dass** der Luftspalt (6) auf einer der ersten Seite gegenüberliegenden zweiten Seite des Torque-Motors (1) größer ist als die radiale Dicke des Abstandshalters (5), und dass der Abstandshalter (5) aufgrund seiner ferromagnetischen Eigenschaft von den Magneten (4) im Luftspalt (6) gehalten wird.

5. Rahmenloser Torque-Motor nach einem der vorhergehenden Ansprüche, **dadurch gekennzeichnet, dass** die biegsame Folie eine Magnetfolie oder ein Magnetgummi ist.

6. Rahmenloser Torque-Motor nach einem der vorhergehenden Ansprüche, **dadurch gekennzeichnet, dass** die biegsame Folie Kunststoffbeschichtet ist.

7. Rahmenloser Torque-Motor nach einem der vorhergehenden Ansprüche, **dadurch gekennzeichnet, dass** die biegsame Folie magnetisiert ist.

8. Rahmenloser Torque-Motor nach einem der vorhergehenden Ansprüche, **dadurch gekennzeichnet, dass** die Transportsicherung (5) in axialer Richtung aus dem Luftspalt (6) ragt.

9. Rahmenloser Torque-Motor nach Anspruch 8, **dadurch gekennzeichnet, dass** die Transportsicherung (5) außerhalb des Luftspaltes (6) eine Greifhilfe (7) aufweist.

## Claims

1. Frameless torque motor with a transportation safety device, said torque motor (1) having a ferromagnetic primary element (2) and a secondary element (3) with magnets (4) which face towards the primary element, said elements being kept at a distance from one another by a transportation safety device (5) consisting of a spacer (5) in an air gap (6) between the primary element (2) and the secondary element (3), **characterised in that** the primary element (2) and the secondary element (3) are fixed to one another by the magnetic force of the magnets (4), the transportation safety device (5) consisting of a flexible foil which is inserted into the air gap (6) in one or more pieces.

2. Frameless torque motor according to claim 1, **characterised in that** the air gap (6) is reduced, on a first side of the torque motor (1), to the radial thickness of the spacer (5), and said spacer (5) is thus clamped between the primary element (2) and the secondary element (3).

3. Frameless torque motor according to either claim 1 or claim 2, **characterised in that** the spacer (5) is ferromagnetic.

4. Frameless torque motor according to either claim 2 or claim 3, **characterised in that** the air gap (6) is larger, on a second side of the torque motor (1) located opposite the first side, than the radial thickness of the spacer (5), and **in that** the spacer (5) is held in the air space (6) because of its ferromagnetic properties.

5. Frameless torque motor according to any one of the preceding claims, **characterised in that** the flexible foil is a magnetic foil or a magnetic rubber.

6. Frameless torque motor according to any one of the preceding claims, **characterised in that** the flexible foil is coated with plastics material.

7. Frameless torque motor according to any one of the preceding claims, **characterised in that** the flexible foil is magnetised.

8. Frameless torque motor according to any one of the preceding claims, **characterised in that** the transportation safety device (5) projects out of the air gap (6) in the axial direction.

9. Frameless torque motor according to claim 8, **characterised in that** the transportation safety device (5) has a gripping aid (7) outside the air gap (6).

## Revendications

1. Moteur torque sans cadre, doté d'une sécurité de transport, ce moteur (1) présentant une partie primaire (2) ferromagnétique et une partie secondaire (3) avec des aimants (4) qui sont disposés en regard de la partie primaire dont ils sont maintenus à distance par une sécurité de transport (5) constituée d'un espaceur (5) logé dans la fente d'air (6) entre la partie primaire (2) et la partie secondaire (3), **caractérisé en ce que** la partie primaire (2) et la partie secondaire (3) sont fixées l'une par rapport à l'autre par la force magnétique des aimants (4), la sécurité de transport (5) étant constituée par une feuille flexible qui est introduite en une ou plusieurs parties dans la fente d'air (6).

2. Moteur torque sans cadre selon la revendication 1, **caractérisé en ce que** la fente d'air (6), sur un premier côté du moteur torque (1) est réduite à l'épaisseur radiale de l'espaceur (5) qui ainsi est pincé entre la partie primaire (2) et la partie secondaire (3).

3. Moteur torque sans cadre selon la revendication 1 ou 2, **caractérisé en ce que** l'espaceur (5) est ferromagnétique.

4. Moteur torque sans cadre selon la revendication 2 ou 3, **caractérisé en ce que** la fente d'air (6), sur un second côté du moteur torque situé à l'opposé du premier, est plus grande que l'épaisseur radiale de l'espaceur (5) qui, du fait qu'il est ferromagnétique, est maintenu dans la fente d'air (6) par les aimants.

5. Moteur torque sans cadre selon une des revendications précédentes, **caractérisé en ce que** la feuille flexible est une feuille magnétique ou est en caoutchouc magnétique.

6. Moteur torque sans cadre selon une des revendications précédentes, **caractérisé en ce que** la feuille flexible porte un revêtement en matière plastique.

7. Moteur torque sans cadre selon une des revendications précédentes, **caractérisé en ce que** la feuille flexible est magnétisée.

8. Moteur torque sans cadre selon une des revendications précédentes, **caractérisé en ce que** la sécurité de transport (5) dépasse, en direction radiale, de la fente d'air (6).

9. Moteur torque sans cadre selon la revendication 8, **caractérisé en ce que** la sécurité de transport (5) présente, à l'extérieur de la fente, une assistance à la saisie (7).
